# EUROPÄISCHE PATENTSCHRIFT

(11) **EP 3 743 166 B1**
(45) Veröffentlichungstag und Bekanntmachung des Hinweises auf die Patenterteilung: **07.02.2024**
(21) Anmeldenummer: 19832678.7
(22) Anmeldetag: 20.12.2019
(51) Int. Cl.: A62B 23/02, A41D 13/11

(54) **ATEMHALBMASKE UND VERFAHREN ZUR HERSTELLUNG EINER ATEMHALBMASKE**
BREATHING-PROTECTION HALF MASK AND METHOD FOR PRODUCING A BREATHING-PROTECTION HALF MASK
DEMI-MASQUE RESPIRATOIRE ET PROCÉDÉ DE FABRICATION D'UN DEMI-MASQUE RESPIRATOIRE

(30) Priorität: 21.12.2018 DE 102018009982
(43) Veröffentlichungstag der Anmeldung: 02.12.2020
(73) Patentinhaber: Dräger Safety AG & Co. KGaA, 23560 Lübeck (DE)
(72) Erfinder: ROSERT, Michael, 23669 Timmendorfer Strand (DE); HASEMANN, Eiko, 22927 Großhansdorf (DE); SCHOLZ, Mathias, 22045 Hamburg (DE); HINZ, Katrin, 23866 Nahe (DE); GRÜNKE, Alexander, 23560 Lübeck (DE)
(74) Vertreter: Meyer-Gramann, Klaus Dieter
(86) Internationale Anmeldenummer: PCT/EP2019/086503
(87) Internationale Veröffentlichungsnummer: WO 2020/127860

(56) Entgegenhaltungen:
- EP-A2- 2 589 413
- EP-B1- 2 589 413
- WO-A1-2017/083289
- CN-A- 103 271 464
- KR-B1- 101 586 077

## Beschreibung

Die vorliegende Erfindung betrifft eine Atemhalbmaske zum Schutz gegen Partikel, Aerosole und / oder Gerüche, wobei (a) die Atemhalbmaske durch zumindest einen Faltvorgang aus einem Aufbewahrungszustand in einen Verwendungszustand bringbar ist, (b) die Atemhalbmaske als Maskenbereiche einen Nasen-Bereich mit einer Nasendichtlinie, einen Kinn-Bereich mit einer Kinndichtlinie und einen zwischen dem Nasen-Bereich und dem Kinn-Bereich angeordneten Mund-Bereich zum Aufspannen eines Atemraums im Verwendungszustand der Atemhalbmaske aufweist, und (c) die Atemhalbmaske zumindest einen ersten Verbindungsabschnitt aufweist, der den Nasen-Bereich und / oder den Kinn-Bereich mit dem Mund-Bereich zur Bildung zumindest eines teilweisen Faltbereiches für den zumindest einen Faltvorgang verbindet. Ferner betrifft die Erfindung ein Verfahren zur Herstellung einer eingangs erwähnten Atemhalbmaske.

### STAND DER TECHNIK

Atemhalbmasken, insbesondere partikelfiltrierende Atemhalbmasken, sind grundsätzlich bekannt. Atemhalbmasken schützen die sie tragenden Menschen je nach Ausführung vor dem Einatmen von wässrigen oder öligen Aerosolen und / oder Partikeln, wie beispielsweise Feinstaub oder Ähnlichem. Sie bieten zumeist keinen Schutz vor Gasen und Dämpfen. Bekannte Atemhalbmasken bestehen oftmals überwiegend aus einem Filtermaterial, beispielsweise einem Vliesstoff, und weisen ferner Gummibänder und einen formbaren Nasenbügel auf, um eine besonders gute Anpassung an ein Gesicht eines Benutzers bereitstellen zu können. Bekannte Bezeichnungen für Atemhalbmasken umfassen auch Feinstaubmasken, Staubmasken oder den englischen Ausdruck Filtering Face Pieces.

Derartige Atemhalbmasken weisen oftmals zusätzlich zum schützenden Filtermaterial Lagen aus einem elektrostatischen Material auf. Damit werden kleine Staubpartikel und Flüssigkeitstropfen durch elektrostatische Kräfte gebunden. Die elektrostatische Wirkung durch Staubanlagerung nimmt mit der Zeit der Benutzung ab, sodass es zu einer merklichen Steigerung des Atemwiderstandes kommt. Derartige Atemhalbmasken sind meist nur für eine einmalige Nutzung, beispielsweise im Verlauf eines Arbeitstages mit der Dauer von acht Stunden, vorgesehen.

Hauptsächlich können die bekannten Atemhalbmasken in vorgeformte und gefaltete Atemhalbmasken unterteilt werden. Die gefalteten Atemhalbmasken können ferner in vertikal gefalteten Atemhalbmasken, horizontal gefaltete Atemhalbmasken und Schnabelmasken unterteilt werden.

Atemhalbmasken können in unterschiedlichen Größen hergestellt und breitgestellt werden. Um einen korrekten Sitz der Atemhalbmaske auf dem Gesicht des Benutzers sicherzustellen, muss der Benutzer eine Atemhalbmaske einer Größe wählen, die der Größe seines Kopfes und / oder Gesichtes entspricht.

GB 871661 zeigt eine Atemhalbmaske (disposable face mask 10), die sich flach zusammenfalten lässt und für eine Verwendung auseinanderfalten lässt. Zwischen zwei Randbereichen (marginal parts 13a, 13b) auf Höhe der Nase bzw. dem Kinn eines Trägers ist ein zentraler Bereich (central part 17) vor dem Mund angeordnet. Zwei Verbindungsabschnitte (regions 11, 12) verbinden die Randbereiche 13a, 13b mit dem zentralen Bereich und bilden Faltbereiche für den Faltvorgang.

US 2010/0051032 A1 zeigt eine faltbare Atemhalbmaske (four-sided dustproof mask), die einen Nasen-Bereich mit einer Nasendichtlinie (upper filter 11), einen Kinn-Bereich mit einer Kinndichtlinie (lower filter 12) und einen Mund-Bereich (center filter 10) zwischen dem Nasen-Bereich 11 und dem Kinn-Bereich 12 aufweist. Zwei Verbindungsabschnitte (upper folding line 21, lower folding line 21) verbinden den Nasen-Bereich 11 bzw. den Kinn-Bereich 12 mit dem Mund-Bereich 10.

Die faltbare Atemhalbmaske von EP 0032422 A1 umfasst ebenfalls einen Nasen-Bereich mit einer Nasendichtlinie (Bereich 12 mit oberer Kante 14 und oberem binder strip 26), Kinn-Bereich mit einer Kinndichtlinie (Bereich 20 unten mit unterer Kante 16 und unterem binder strip 26) und einen Mund-Bereich zwischen dem Nasen-Bereich 12 und dem Kinn-Bereich 30 (Bereich zwischen den Linien 22). Die Atemhalbmaske wird seitlich von zwei Elementen (rows of stitching 28) begrenzt.

CN103271464 A, KR101586077 B1 und WO2017/083289 A1 zeigen faltbare Halbmasken, deren Nasen- und/oder Kinnbereich mit ersten Verbindungsabschnitten verbunden sind, wobei die zweiten Verbindungsabschnitte an den flachen Bereichen des Nasen- und/oder Kinnbereichs liegen, die vom seitlichen Rand entfernt sind und die Länge der Nasen- und/oder Kinndichtungslinie definieren.

### OFFENBARUNG DER ERFINDUNG

Der Erfindung liegt die Aufgabe zugrunde, eine Atemhalbmaske zum Schutz gegen Partikel, Aerosole und / oder Gerüche sowie ein Verfahren zum Herstellen einer solchen Atemhalbmaske anzugeben, wobei sich die Atemhalbmaske bei ausreichend großen Tragekomfort relativ einfach herstellen lässt.

Die Aufgabe wird durch eine Atemhalbmaske mit den Merkmalen des Anspruchs 1 sowie durch ein Verfahren mit den Merkmalen des Anspruchs 9 gelöst. Vorteilhafte Ausgestaltungen sind in den abhängigen Ansprüchen angegeben
Dabei gelten Merkmale und Details, die im Zusammenhang mit der Atemhalbmaske beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Nach einem ersten Aspekt der Erfindung wird eine Aufgabe gelöst durch eine Atemhalbmaske zum Schutz gegen Partikel, Aerosole und / oder Gerüche, wobei (a) die Atemhalbmaske durch zumindest einen Faltvorgang aus einem Aufbewahrungszustand in einen Verwendungszustand bringbar ist, (b) die Atemhalbmaske als Maskenbereiche einen Nasen-Bereich mit einer Nasendichtlinie, einen Kinn-Bereich mit einer Kinndichtlinie und einen zwischen dem Nasen-Bereich und dem Kinn-Bereich angeordneten Mund-Bereich zum Aufspannen eines Atemraums im Verwendungszustand der Atemhalbmaske aufweist, und (c) die Atemhalbmaske zumindest einen ersten Verbindungsabschnitt aufweist, der den Nasen-Bereich und / oder den Kinn-Bereich mit dem Mund-Bereich zur Bildung zumindest eines teilweisen Faltbereiches für den oder einen Faltvorgang verbindet. Die erfindungsgemäße Atemhalbmaske weist (d) zumindest einen zweiten Verbindungsabschnitt auf, der den Nasen-Bereich und / oder den Kinn-Bereich mit zumindest einem der anderen Maskenbereiche zur Begrenzung einer Länge der Nasendichtlinie und / oder einer Länge der Kinndichtlinie verbindet. Der oder ein zweiter Verbindungsabschnitt erstreckt sich (e) zumindest teilweise auf einer Fläche des Nasen-Bereichs und / oder einer Fläche des Kinn-Bereichs entfernt von einem Rand des Nasen-Bereichs und / oder einem Rand des Kinn-Bereichs zwischen dem oder einem ersten Verbindungsabschnitt und der Nasendichtlinie und / oder der Kinndichtline, wobei am Mund-Bereich ein Nasenverstärker und ein Kinnverstärker vorgesehen sind,die einteilig mit dem restlichen Mund-Bereich ausgebildet sind, wobei der Nasenverstärker und der Kinnverstärker sich jeweils überlappend mit dem Nasen-Bereich bzw. dem Kinn-Bereich erstrecken und eine höhere Steifigkeit als der jeweils überdeckte Nasen-Bereich bzw. Kinnbereich aufweisen.

In der folgenden Beschreibung ist von "dem ersten Verbindungsabschnitt" und "dem zweiten Verbindungsabschnitt" sowie von einem optionalen dritten Verbindungsabschnitt die Rede. Falls die Atemhalbmaske mehrere erste und / oder mehrere zweite und / oder mehrere dritte Verbindungsabschnitt aufweist, so bezieht sich das nachfolgend Gesagte auf mindestens einen ersten bzw. auf den einen zweiten bzw. auf mindestens einen dritten Verbindungsabschnitt. Das Gesagte kann sich auch auf gleichzeitig auf mehrere erste, mehrere zweite und / oder mehrere dritte Verbindungsabschnitte beziehen.

Eine erfindungsgemäße Atemhalbmaske vermag in vielen Fällen einen Träger gegen Partikel und Aerosole zu schützen. Für diesen Zweck kann die Atemhalbmaske in einen Verwendungszustand gebracht werden, in dem sie zum Bedecken von Nase und Mund eines Benutzers ausgebildet ist. Über optionale weitere Elemente, beispielsweise ein Halteband, insbesondere ein Gummiband, und / oder ein Nasenbügel, die an die Atemhalbmaske angeordnet werden können, passt sich die Atemhalbmaske von allein an den Kopf eines Benutzers an und / oder wird von allein fixiert. Neben dem bereits beschriebenen Verwendungszustand kann die Atemhalbmaske auch in einem Aufbewahrungszustand vorliegen, in dem die Atemhalbmaske zusammengefaltet und dadurch vergleichsweise platzsparend aufbewahrt werden kann. Zwischen dem Aufbewahrungszustand und dem Verwendungszustand kann die Atemhalbmaske bevorzugt reversibel durch zumindest einen Faltvorgang, insbesondere einen horizontalen Faltvorgang, umgeformt werden.

Die erfindungsgemäße Atemhalbmaske weist mehrere, nämlich mindestens drei Maskenbereiche auf, nämlich einen Nasen-Bereich, einen Kinn-Bereich und einen zwischen dem Nasen-Bereich und dem Kinn-Bereich angeordneten Mund-Bereich. Der Nasen-Bereich und der Kinn-Bereich der erfindungsgemäßen Atemhalbmaske weisen eine Nasendichtlinie und eine Kinndichtlinie auf, insbesondere um eine Abdichtung beim Aufliegen auf den entsprechenden Gesichtspartien eines Benutzers bereitstellen zu können. Diese Dichtlinien können beispielsweise hinsichtlich ihrer Dichtwirkung auch durch eine entsprechende Beschichtung weiter verbessert werden. Zwischen dem Nasen-Bereich und dem Kinn-Bereich ist ein Mund-Bereich angeordnet, der im Verwendungszustand der Atemhalbmaske einen Atemraum der Atemhalbmaske aufspannt. Dieser Atemraum ist zwischen dem Mund und der Nase des Benutzers und dem Mund-Bereich der erfindungsgemäßen Atemhalbmaske angeordnet. Die einzelnen Maskenbereiche einer erfindungsgemäßen Atemhalbmaske bilden somit den Aufbau der erfindungsgemäßen Atemhalbmaske. Weitere optionale Elemente, beispielsweise das Halteband, der Nasenbügel und / oder Befestigungselemente zum Befestigen beispielsweise des Haltebands und / oder des Nasenbügels an der Atemhalbmaske, können die erfindungsgemäße Atemhalbmaske ergänzen.

Der erste Verbindungsabschnitt verbindet insbesondere einen Rand des Nasen-Bereichs und / oder an einen Rand des Kinn-Bereichs mit einem Rand des Mund-Bereichs. Der erste Verbindungsabschnitt kann den Faltbereich oder den größeren Teil des Faltbereichs für den Faltvorgang bereitstellen oder ausbilden. Der Faltbereich wird jedenfalls durch den zweiten Verbindungsabschnitt bei einer erfindungsgemäßen Atemhalbmaske gegenüber einem Faltbereich einer nicht erfindungsgemäßen Atemhalbmaske ohne den zweiten Verbindungsabschnitt verkleinert. Dabei wird bei einer erfindungsgemäßen Atemhalbmaske die Länge der Nasendichtlinie und / oder die Länge der Kinndichtlinie gegenüber der Länge der Nasendichtlinie und / oder der Länge der Kinndichtlinie einer nicht erfindungsgemäßen Atemhalbmaske ohne den zweiten Verbindungsabschnitt verkürzt. Man könnte auch sagen, dass die zweiten Verbindungsabschnitte die Nasendichtlinie bzw. die Kinndichtlinie in eine nicht nutzbare Nasendichtlinie bzw. eine nicht nutzbare Kinndichtlinie und in eine nutzbare Nasendichtlinie bzw. eine nutzbare Kinndichtlinie unterteilen. Anders als die nicht nutzbare Nasendichtlinie bzw. nicht nutzbare Kinndichtlinie kann die nutzbare Nasendichtlinie bzw. die nutzbare Kinndichtlinie im Verwendungszustand der Atemhalbmaske für das Aufspannen des Atemraums genutzt werden und abdichtend an die Gesichtspartien des Benutzers der Atemhalbmaske angelegt werden oder sich von alleine anlegen. Möglich ist auch, dass im Verwendungszustand der Atemhalbmaske die beiden zweiten Verbindungsabschnitte die Nasendichtlinie und Kinndichtlinie auf die nutzbare Nasendichtlinie und die nutzbare Kinndichtlinie- verglichen mit dem Aufbewahrungszustand der Atemhalbmaske - verkürzen und eine nicht nutzbare Nasendichtlinie und eine nicht nutzbare Kinndichtlinie gebildet werden.

Bei bekannten gefalteten Atemhalbmasken ist oftmals vorgesehen, dass diese zwischen einem Aufbewahrungszustand und einem Verwendungszustand durch einen Faltvorgang umwandelbar sind. Dieser Faltvorgang kann für einen Benutzer einer bekannten Atemhalbmaske schwierig und mühselig sein, beispielsweise wenn sich beim Aufsetzen der Atemhalbmaske die einzelnen Maskenbereiche aus ihren Positionen im Verwendungszustand wieder wegbewegen, und zwar insbesondere dann, wenn die Atemhalbmaske zu groß oder zu klein ist, wodurch es zu einem falschen Aufsetzen und damit zu Undichtigkeiten der Atemhalbmaske kommen kann. Auch kann zumindest ein Teil einer zu kleinen Atemhalbmaske dem Mund des Benutzers sehr nahekommen, wodurch es zu einem beengten Raumgefühl beim Tragen der Atemhalbmaske kommen kann. Dieser beengte Atemraum kann bei bekannten Atemhalbmasken auch zu einer Region mit erhöhter Feuchtigkeit führen, wodurch ein Atemwiderstand der Atemhalbmaske erhöht wird und zusätzlich durch dieses enge Anliegen der Atemhalbmaske eine erhöhte Temperatur unter der Atemhalbmaske hervorgerufen wird.

Derzeit werden üblicherweise Einheitsgrößen von Atemhalbmasken angeboten. Beim Festlegen einer Atemhalbmaske einer Einheitsgröße an besonders kleinen und / oder großen Kopfgrößen und -formen werden oft ein schlechter Dichtsitz und geringer Tragekomfort erzielt. Eine Atemhalbmaske in einer Einheitsgröße lässt sich bei großen Köpfen zudem sehr schwer aufsetzen und der Kinnbereich der Atemhalbmaske rutscht bei großen Köpfen unvorteilhaft teilweise vom Kinn zu dem Mund. Bei kleinen Köpfen hingegen rutscht die Atemhalbmaske in Einheitsgröße am Gesicht sehr weit nach oben, sodass die Atemhalbmaske unvorteilhafter Weise auch die Augenpartie berührt. Bei kleinen Köpfen sitzt eine Atemhalbmaske einer Einheitsgröße zudem sehr nahe am Mund, was zu einem beengten Atemraumgefühl führt.

Die erfindungsgemäße Atemhalbmaske ist hingegen dank des oder mindestens eines zweiten Verbindungsabschnittes einfach und kostengünstig in unterschiedlichen Größen herstellbar, weil Maskenbereiche der gleichen Größe für unterschiedliche Größen der Atemhalbmasken hergestellt und bereitgestellt werden können. Damit entfällt der bisher notwendige Herstellungsschritt, Maskenbereiche unterschiedlicher Größe zur Herstellung von Atemhalbmasken unterschiedlicher Größe herstellen und bereitstellen zu müssen. Durch den zweiten Verbindungsabschnitt ist die Nasendichtlinie und / oder die Kinndichtlinie der erfindungsgemäßen Atemhalbmaske nämlich gegenüber der mit den Maskenbereichen gleicher Größe bereitgestellten Nasendichtlinien und / oder Kinndichtlinien auf einfache und kostengünstige Art und Weise kürzer ausgebildet. Bei kürzerer Nasendichtlinie und / oder kürzerer Kinndichtlinie ist die Atemhalbmaske, insbesondere der Atemraum, kleiner ausgebildet. Durch die Wahl der Stelle oder des Bereichs, an der oder in dem der zweite Verbindungsabschnitt an dem Nasen-Bereich und / oder dem Kinn-Bereich angeordnet wird, lässt sich bei der Herstellung die gewünschte Größe der Atemhalbmaske individuell einstellen. Beispielsweise können die Maskenbereiche einzig in einer vordefinierten Größe XL hergestellt werden und durch den zweiten Verbindungsabschnitt abhängig davon, an welcher Stelle oder in welchem Bereich des Nasen-Bereichs und / oder des Kinn-Bereichs der zweite Verbindungsabschnitt ausgebildet wird, auf eine vordefinierte Größe L, M oder S reduziert werden.

Darüber hinaus ist es möglich, eine bereits hergestellte Atemhalbmaske in ihrer Größe zu verändern, da die Anordnung des zweiten Verbindungsabschnittes erst nach dem Verbinden der einzelnen Maskenbereiche zu der Atemhalbmaske durchgeführt kann. Dies ermöglicht es, den zusätzlichen Herstellungsschritt, die Atemhalbmaske zu verkleinern, am Ende des Herstellungsverfahrens durchzuführen, sodass bisher verwendete Herstellungsverfahren nicht oder nur unwesentlich geändert werden müssen. Die Implementierung dieses Herstellungsschrittes ist somit besonders einfach und kostengünstig in dem bisherigen Herstellungsverfahren realisierbar.

Bevorzugt weist die Atemhalbmaske zumindest zwei, insbesondere genau zwei, erste Verbindungsabschnitte auf, die jeweils zumindest den Nasen-Bereich und den Kinn-Bereich mit dem Mund-Bereich zur Bildung eines teilweisen Faltbereiches für den oder mindestens einen Faltvorgang verbinden.

Weiterhin bevorzugt weist die Atemhalbmaske zumindest zwei, insbesondere genau zwei oder zumindest vier oder genau vier, zweite Verbindungsabschnitte auf, die den Nasen-Bereich und / oder den Kinn-Bereich mit zumindest einem der anderen Maskenbereiche zur Begrenzung einer Länge der Nasendichtlinie und / oder einer Länge der Kinndichtlinie verbinden.

In einer bevorzugten Ausführungsform der erfindungsgemäßen Atemhalbmaske erstreckt sich der zweite Verbindungsabschnitt zumindest teilweise auf einer Fläche des Nasen-Bereichs und / oder einer Fläche des Kinn-Bereichs entfernt von einem Rand des Nasen-Bereichs und / oder einem Rand des Kinn-Bereichs zwischen dem ersten Verbindungsabschnitt und der Nasendichtlinie und / oder der Kinndichtlinie. Der Rand des Nasen-Bereichs und / oder der Rand des Kinn-Bereichs weisen dabei vorzugsweise den Verbindungsabschnitt auf. Durch eine derartige Anordnung des zweiten Verbindungsabschnittes an dem Nasen-Bereich und / oder dem Kinn-Bereich kann die Länge der Nasendichtlinie und / oder der Länge der Kinndichtlinie auf einfache Weise und mit hoher Gestaltungsfreiheit begrenzt werden.

In einer weiteren bevorzugten Ausführungsform der erfindungsgemäßen Atemhalbmaske verbindet der zweite Verbindungsabschnitt die Nasendichtlinie und / oder die Kinndichtlinie mit dem Mund-Bereich zur Begrenzung der Länge der Nasendichtlinie und / oder der Länge der Kinndichtlinie. Die Verbindung der Nasendichtlinie und / oder der Kinndichtlinie am Mund-Bereich ist besonders stabil, weil damit die Nasendichtlinie und / oder Kinndichtlinie an der Stelle begrenzt wird, an der beim Auffalten der Atemhalbmaske von dem Aufbewahrungszustand in den Verwendungszustand die größten Zugkräfte infolge des Auffaltens angreifen. Der zweite Verbindungsabschnitt bricht oder reißt demgemäß selbst dann in vielen Fällen nicht, wenn ein Benutzer eine erfindungsgemäße Atemhalbmaske einer Größe aufsetzt, die für seinen Kopf oder sein Gesicht zu klein ist.

In einer noch weiteren bevorzugten Ausführungsform der erfindungsgemäßen Atemhalbmaske verbindet der zweite Verbindungsabschnitt die Nasendichtlinie mit der Kinndichtlinie zur Begrenzung der Länge der Nasendichtlinie und der Länge der Kinndichtlinie. Dabei entspricht vorteilhafterweise die begrenzte Länge der Nasendichtlinie der begrenzten Länge der Kinndichtlinie, sodass die Atemhalbmaske gleichmäßig verkleinert ist und sowohl an einer linken Gesichtspartie als auch an einer rechten Gesichtspartie des Benutzers passgenau sitzt.

In einer weiteren bevorzugten Ausführungsform der erfindungsgemäßen Atemhalbmaske verbindet der zweite Verbindungsabschnitt den Nasen-Bereich, den Kinn-Bereich und den Mund-Bereich miteinander. Durch die Anordnung der Verbindung in allen Maskenbereichen wird eine ganz besonders stabile Verbindung erreicht, weil die beim Auffalten der Atemhalbmaske von dem Aufbewahrungszustand in den Verwendungszustand auf den zweiten Verbindungsabschnitt wirkenden Zugkräfte auf alle Maskenbereiche verteilt werden.

In einer vorteilhaften Ausführungsform der erfindungsgemäßen Atemhalbmaske ist der zweite Verbindungsabschnitt quer oder im Wesentlichen quer zu einer horizontalen Erstreckung der Atemhalbmaske im Verwendungszustand, also auf einem Gesicht eines Trägers, ausgebildet. Quer meint dabei einen Winkel von 90°. Im Wesentlichen quer meint insbesondere einen Winkel von 70° bis 110°. Die horizontale Erstreckung ist insbesondere die längste Erstreckung der Atemhalbmaske im Aufbewahrungszustand, also im gefalteten Zustand. Im Verwendungszustand verläuft die horizontale Erstreckung in der Transversalebene des Benutzers, der die Atemhalbmaske trägt. Die horizontale Erstreckung der Atemhalbmaske verläuft somit entlang einer Linie senkrecht zur Längsachse des ausgestreckten Benutzers. Bei einem stehenden Menschen verläuft die horizontale Erstreckung entlang einer zum Boden horizontalen Linie. Dadurch lässt sich eine gegenüber beim Auffalten der Atemhalbmaske auftretenden Kräften besonders stabile Begrenzung der Nasendichtlinie und / oder Kinndichtlinie erzielen, sodass der zweite Verbindungsabschnitt kleiner ausgebildet werden kann. Dies spart Materialkosten und Herstellungszeit.

In einer weiteren vorteilhaften Ausführungsform der erfindungsgemäßen Atemhalbmaske umfasst der zweite Verbindungsabschnitt durch zumindest eine stoffschlüssige Verbindung, insbesondere eine Schweißnaht oder Klebung, zumindest ein eingeschweißtes Kunststoffteil und / oder zumindest eine mechanische Klammer. Eine Schweißnaht kann kostengünstig hergestellt werden und ist dennoch sehr stabil. Eine Klebung kann bei manchen Filtermaterialien des Maskenbereichs gegenüber einer anderen Verbindung zu bevorzugen sein. Ein eingeschweißtes Kunststoffteil ist ganz besonders stabil, da das Kunststoffteil eine zusätzliches Strukturteil darstellt, das die Filtermaterialen der Maskenbereiche miteinander verbindet und zusammenhält. Eine mechanische Klammer kann ohne weitere Gerätschaften, wie beispielsweise Schweißgeräte und Klebstoffapplikatoren, und daher auch manuell an den Maskenbereichen befestigt werden. Dazu kann sie beispielsweise zumindest zwei Eingriffsabschnitte, beispielsweise in Form von Haken aufweisen, die in das Filtermaterial eingreifen. Auch der erste Verbindungsabschnitt und weitere Verbindungsabschnitte können jeweils zumindest eine stoffschlüssige Verbindung, insbesondere eine Schweißnaht oder Klebung, zumindest ein eingeschweißtes Kunststoffteil und / oder zumindest eine mechanische Klammer, insbesondere in einer der vorstehend ausgeführten Varianten, umfassen.

In einer vorteilhaften Ausführungsform der erfindungsgemäßen Atemhalbmaske ist der zweite Verbindungsabschnitt in einem Abstand von 1% bis 30%, bevorzugt 3% bis 25%, ganz besonders bevorzugt 5% bis 15% der, von einem ersten Längsende der Atemhalbmaske zu einem dem ersten Längsende gegenüberliegenden zweiten Längsende der Atemhalbmaske in Richtung der transversalen Erstreckung der Atemhalbmaske im Verwendungszustand gemessenen, Länge der Atemhalbmaske von dem ersten Längsende oder dem zweiten Längsende entfernt angeordnet. Dadurch kann vermieden werden, dass an den Längsenden, an denen typischerweise auch Befestigungselemente für Haltebänder angeordnet werden, zu große Kräfte beim Auffalten auftreten, die das Filtermaterial der Maskenbereiche beschädigen könnten. Es hat sich außerdem herausgestellt, dass dadurch eine hinreichend große, aber nicht zu große Verkürzung der Dichtlinien möglich ist, um die erfindungsgemäße Atemhalbmaske in den für Benutzer erforderlichen Größen bereitzustellen und hierfür soweit als möglich das gleiche Werkzeug für verschieden große Atemhalbmaske zu verwenden.

In einer weiteren Ausführungsform der erfindungsgemäßen Atemhalbmaske ist zumindest ein dritter Verbindungsabschnitt derart neben dem zweiten Verbindungsabschnitt angeordnet, dass der dritte Verbindungsabschnitt die Länge der Nasendichtlinie und / oder die Länge der Kinndichtlinie weiter begrenzt. Insbesondere ist der dritte Verbindungsabschnitt von dem zweiten Verbindungsabschnitt beabstandet angeordnet. Der dritte Verbindungsabschnitt kann insbesondere in einer Variante und mit Merkmalen ausgebildet sein, wie dies in der Beschreibung und den Zeichnungen für den zweiten Verbindungsabschnitt beschrieben oder gezeigt ist. Der zweite Verbindungsabschnitt und der dritte Verbindungsabschnitt können insbesondere unterschiedlich ausgebildet sein. Beispielsweise kann der zweite Verbindungsabschnitt als ein in das Filtermaterial eingeschweißtes Kunststoffteil und der dritte Verbindungsabschnitt als Schweißnaht ausgebildet sein. Bei manchen Formen der Atemhalbmaske kann es beispielsweise vorteilhaft sein, mittels des zweiten Verbindungsabschnittes die Geometrie des Atemraums oder eine maximale Größe der Atemhalbmaske einzustellen und erst durch die Ausbildung des dritten Verbindungsabschnittes die Länge der Nasendichtlinie und / oder Länge der Kinndichtlinie zu begrenzen, also die Größe der Atemhalbmaske zu verkleinern.

Bevorzugt weisen der zweite Verbindungsabschnitt und / oder der dritte Verbindungsabschnitt eine längliche Form auf. Die längliche Form meint insbesondere, dass eine Längserstreckung des Verbindungsabschnittes das 2-fache bis 30-fache, insbesondere das 5-fache bis 20-fache einer Breitenerstreckung des Verbindungsabschnittes beträgt. Alternativ oder zusätzlich kann der zweite und / oder der dritte Verbindungsabschnitt eine rechteckige Form, eine rechteckige Form mit abgerundeten Ecken oder eine ovale Form aufweisen. Dies verbessert die Aufnahme der beim Aufspannen des Atemraums entstehenden Zugkräfte durch den jeweiligen Verbindungsabschnitt. Der zweite und / oder der dritte Verbindungsabschnitt kann zudem auch mit dem ersten Verbindungsabschnitt verbunden sein.

Bevorzugt ist bei der erfindungsgemäßen Atemhalbmaske die Nasendichtlinie und / oder die Kinndichtlinie durch die Begrenzung mittels des zweiten Verbindungsabschnittes um 5% bis 40%, bevorzugt um 7% bis 35%, ganz besonders bevorzugt um 10% bis 30% und weiterhin bevorzugt um 12% bis 25% im Verwendungszustand kürzer als im Aufbewahrungszustand. Dadurch lassen sich übliche Größen von Atemhalbmasken bereitstellen, wobei sich soweit als möglich Atemhalbmasken in verschiedenen Größe mit der gleichen Anlage fertigen lassen.

Insbesondere ist die erfindungsgemäße Atemhalbmaske eine horizontal gefaltete Atemhalbmaske. Dies bedeutet, dass die Falten zwischen den Maskenbereichen parallel zu der horizontalen Erstreckung der Atemhalbmaske sowie senkrecht zur Längsachse eines Menschen verlaufen. Die Maskenbereiche müssen dementsprechend in vertikaler Richtung aufgeklappt werden, um die Atemhalbmaske von dem Aufbewahrungszustand in den Verwendungszustand zu bringen.

Der Mund-Bereich einer erfindungsgemäßen Atemhalbmaske weist einen Nasenverstärker und / oder einen Kinnverstärker auf, der die Atemhalbmaske im Nasenbereich bzw. im Kinnbereich verstärken. Der Nasenverstärker ist zumindest abschnittsweise überlappend mit dem Nasen-Bereich angeordnet und / oder der Kinnverstärker zumindest abschnittsweise überlappend mit dem Kinn-Bereich angeordnet.

Bei einer erfindungsgemäßen Atemhalbmaske sind entweder ein Nasenverstärker oder ein Kinnverstärker, bevorzugt sogar sowohl ein Nasenverstärker als auch ein Kinnverstärker, vorgesehen.

Der Nasenverstärker ist derart als Teil des Mund-Bereichs ausgebildet, dass er überlappend mit dem Nasen-Bereich angeordnet ist. Analog ist der Kinnverstärker derart als Teil des Mund-Bereichs ausgebildet, dass er überlappend mit dem Kinn-Bereich angeordnet ist. Durch diese Überlappungsbereiche des Mund-Bereichs mit dem Nasen-Bereich und / oder dem Kinn-Bereich kann insbesondere eine Vergrößerung des aufgespannten Atemraums sowie eine erhöhte Stabilität der Atemhalbmaske bereitgestellt werden. Zumindest an den Überlappungsbereichen, beispielsweise wenigstens an denjenigen Abschnitten, an denen der Mund-Bereich mit dem Nasen-Bereich beziehungsweise dem Kinn-Bereich verbunden sind, ist eine Materialstärke erhöht. Alternativ oder zusätzlich kann auch der gesamte Nasenverstärker überlappend mit dem Nasen-Bereich bzw. der gesamte Kinnverstärker und der Kinn-Bereich überlappend ausgebildet sein, wodurch eine Materialstärke in diesen Bereichen ebenfalls erhöht ist. Dadurch und insbesondere durch die Umfaltung des Nasenverstärkers und / oder des Kinnverstärkers kann automatisch bereitgestellt werden, dass sich im aufgefalteten Zustand, das heißt im Verwendungszustand der Atemhalbmaske, in diesen Bereichen eine erhöhte Stabilität einstellt. Ein Zusammenfallen der erfindungsgemäßen Atemhalbmaske aus ihrem Verwendungszustand zurück in Richtung ihres Aufbewahrungszustands kann auf diese Weise erschwert und bestenfalls verhindert werden. Der aufgespannte Atemraum wird ebenfalls durch das Vorhandensein eines mit dem Nasen-Bereich überlappend angeordneten Nasenverstärkers bzw. eines mit dem Kinn-Bereich überlappend angeordneten Kinnverstärkers verbessert. Auch der Faltvorgang aus dem Aufbewahrungszustand in den Verwendungszustand wird durch diese höhere Stabilität unterstützt, insbesondere hinsichtlich einer Verhinderung eines Zurückfaltens aus dem Verwendungszustand in den Aufbewahrungszustand.

Bei einer erfindungsgemäßen Atemhalbmaske kann durch das Vorhandensein eines Nasenverstärkers und / oder eines Kinnverstärkers der Faltvorgang aus dem Aufbewahrungszustand in den Verwendungszustand erleichtert werden. Gleichzeitig wird für die erfindungsgemäße Atemhalbmaske eine höhere Stabilität bereitgestellt, wodurch sich insbesondere auch ein größerer Atemraum vor dem Mund oder der Nase eines Benutzers durch eine erfindungsgemäße Atemhalbmaske bereitstellen lässt. Es hat sich gezeigt, dass der Nasenverstärker und / oder Kinnverstärker einer erfindungsgemäßen Atemhalbmaske in einer Einheitsgröße für unterschiedliche Größen der Atemhalbmaske bereitgestellt werden kann, sodass neben den Maskenbereichen auch der Nasenverstärker und / oder der Kinnverstärker nicht in unterschiedlichen Größen bereitgestellt werden muss. Gleichwohl kann der Nasenverstärker und / oder Kinnverstärker in unterschiedlichen Größen abhängig von der Größe der herzustellenden Atemhalbmaske bereitgestellt werden, um den Sitz der Atemhalbmaske noch weiter zu verbessern. Ein insgesamt erhöhter Tragekomfort kann somit durch eine Atemhalbmaske gemäß dieser Ausgestaltung bereitgestellt werden.

Bevorzugt ist bei der erfindungsgemäßen Atemhalbmaske der zweite Verbindungsabschnitt in Richtung der horizontalen Erstreckung der Atemhalbmaske näher an dem ersten Längsende als an einer Mitte der Atemhalbmaske angeordnet. Dadurch wird sichergestellt, dass ein hinreichend großer Atemraum von dem Mund-Bereich aufgespannt wird, sodass die Atemhalbmaske besonders komfortabel ist. Weiter bevorzugt liegen sich zwei zweite Verbindungsabschnitte an dem ersten Längsende und dem zweiten Längsende der Atemhalbmaske gegenüber. Dadurch wird eine beim Aufspannen des Atemraums auf die zweiten Verbindungsabschnitte ausgeübte Belastung gleichmäßig verteilt. Das Risiko, dass eine der beiden zweiten Verbindungsabschnitte reißt oder bricht, ist gering, sodass eine solche Atemhalbmaske besonders stabil ausgebildet ist. Zusätzlich kann dadurch ein gegenüber der Sagittalebene symmetrisches Erscheinungsbild der vom Benutzer getragenen Atemhalbmaske im Verwendungszustand erzeugt werden, da die Dichtlinien symmetrisch an den Gesichtspartien des Benutzers angeordnet werden können. Dies wird insbesondere dadurch erreicht, dass die beiden zweiten Verbindungsabschnitte jeweils in einem im Wesentlichen gleichen Abstand von dem ersten und dem zweiten Längsende angeordnet sind. Im Wesentlichen bedeutet dabei, dass Abweichungen von bis zu 20% zwischen den Abständen bestehen können. Das Erscheinungsbild wird weiterhin verbessert, wenn die gleiche Art von Verbindung als erste Verbindung und zweite Verbindung gewählt wird.

Nach einem zweiten Aspekt der Erfindung wird eine Aufgabe gelöst durch ein Verfahren zur Herstellung der erfindungsgemäßen Atemhalbmaske, die durch zumindest einen Faltvorgang aus einem Aufbewahrungszustand in einen Verwendungszustand bringbar ist, mit den Schritten: (a) Bereitstellen des Nasen-Bereichs, des Kinn-Bereichs und des Mund-Bereichs, und (b) Verbinden des Nasen-Bereichs und / oder des Kinn-Bereichs mit dem Mund-Bereich mittels des ersten Verbindungsabschnittes, der den Nasen-Bereich und / oder den Kinn-Bereich mit dem Mund-Bereich zur Bildung des einen teilweisen Faltbereiches für den Faltvorgang verbindet, (c) Verbinden des Nasen-Bereichs und / oder des Kinn-Bereichs mit zumindest einem der anderen Maskenbereiche mittels des zweiten Verbindungsabschnittes derart, dass die Länge der Nasendichtlinie und / oder die Länge der Kinndichtlinie begrenzt wird.

### BEVORZUGTE AUSFÜHRUNGSBEISPIELE

Weitere die Erfindung verbessernde Maßnahmen ergeben sich aus der nachfolgenden Beschreibung zu einigen Ausführungsbeispielen der Erfindung, welche in den Figuren dargestellt sind. Sämtliche aus den Ansprüchen, der Beschreibung oder der Zeichnung hervorgehende Merkmale und / oder Vorteile, einschließlich konstruktiver Einzelheiten und räumlicher Anordnungen können sowohl für sich, als auch in den verschiedenen Kombinationen erfindungswesentlich sein. Es zeigen jeweils schematisch:
- Figur 1: eine Schrägansicht eines Ausführungsbeispiels einer an einem Benutzer angelegten erfindungsgemäßen Atemhalbmaske im Verwendungszustand,
- Figur 2: eine Draufsicht auf Maskenbereiche zu einem Verfahrensschritt eines Ausführungsbeispiels des erfindungsgemäßen Verfahrens zur Herstellung einer Atemhalbmaske,
- Figur 3a: eine Draufsicht auf ein erstes Ausführungsbeispiel einer erfindungsgemäßen Atemhalbmaske im Aufbewahrungszustand,
- Figur 3b: eine Detailansicht auf das erste Ausführungsbeispiel einer erfindungsgemäßen Atemhalbmaske aus Figur 3a,
- Figur 4a: eine Draufsicht auf ein zweites Ausführungsbeispiel einer erfindungsgemäßen Atemhalbmaske im Aufbewahrungszustand,
- Figur 4b: eine Detailansicht auf das zweite Ausführungsbeispiel der erfindungsgemäßen Atemhalbmaske aus Figur 4a,
- Figur 5: eine Draufsicht auf das zweite Ausführungsbeispiel einer erfindungsgemäßen Atemhalbmaske aus Figur 4a im Verwendungszustand.

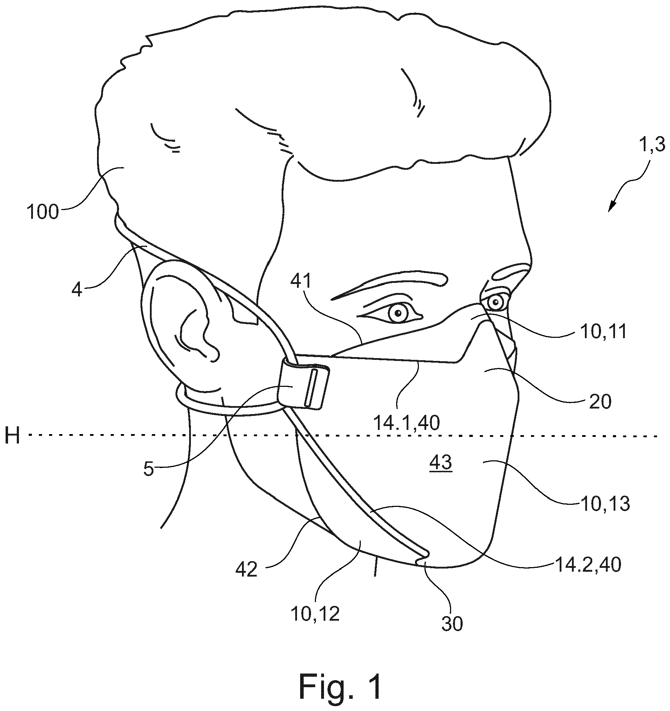

Elemente mit gleicher Funktion und Wirkungsweise sind in den Fig. 1 bis 5 jeweils mit denselben Bezugszeichen versehen.

In Fig. 1 ist eine erfindungsgemäße Atemhalbmaske 1 in ihrem Verwendungszustand 3 bei Benutzung durch einen Benutzer 100 gezeigt. Bei der gezeigten Atemhalbmaske 1 handelt es sich um eine horizontal faltbare Atemhalbmaske 1. Die erfindungsgemäße Atemhalbmaske 1 weist in diesem Ausführungsbeispiel drei Maskenbereiche 10 auf. Die drei Maskenbereiche 10 sind ein Nasen-Bereich 11, ein Kinn-Bereich 12 sowie ein Mund-Bereich 13. Der Nasen-Bereich 11, der Kinn-Bereich 12 und der Mund-Bereich 13 erstrecken sich entlang einer horizontalen Erstreckung H der Atemhalbmaske 1, die einer gestrichelten Linie folgt. Der Nasen-Bereich 11, der Kinn-Bereich 12 und der Mund-Bereich 13 sind in vertikaler Richtung relativ zueinander angeordnet. Die Maskenbereiche 10 können insbesondere textile Filtermaterialien aufweisen beziehungsweise aus textilen Filtermaterialien wie beispielsweise Vliesstoffen bestehen. Zur Bereitstellung einer Filtereigenschaft können bevorzugt auch mechanische und / oder elektrostatische und / oder triboelektrische Filtermaterialien verwendet werden, insbesondere für den Mund-Bereich 13. Über ein Halteband 4, das durch ein Befestigungselement 5 am Mund-Bereich 13 der erfindungsgemäßen Atemhalbmaske 1 angeordnet ist, kann die gesamte Atemhalbmaske 1 am Kopf des Benutzers 100 befestigt werden. Nase und Mund des Benutzers 100 können auf diese Weise sicher durch eine erfindungsgemäße Atemhalbmaske 1 abgedeckt werden, wobei vor dem Mund und der Nase des Benutzers 100 insbesondere durch den Mund-Bereich 13 ein Atemraum 43 aufgespannt wird. Der Nasen-Bereich 11 weist zur besseren Abdichtung gegenüber dem Benutzer 100 eine Nasendichtlinie 41, der Kinn-Bereich 12 eine entsprechende Kinndichtlinie 42 auf. Erste Verbindungsabschnitte 14.1, 14.2, die auf einen Teil ihrer Länge gleichzeitig jeweils einen Faltbereich 40 für einen Faltvorgang aus einem Aufbewahrungszustand 2 (nicht mit abgebildet) in den gezeigten Verwendungszustand 3 der erfindungsgemäßen Atemhalbmaske 1 bilden, ermöglichen ein Verbinden der einzelnen Maskenbereiche 10. Die Maskenbereiche 10 sind an diesen ersten Verbindungsabschnitten 14.1, 14.2 bevorzugt miteinander verschweißt.

Im vorliegenden Ausführungsbeispiel sind am Mund-Bereich 13 ein Nasenverstärker 20 und ein Kinnverstärker 30 vorgesehen.

Der Nasenverstärker 20 und der Kinnverstärker 30 sind einteilig mit dem restlichen Mund-Bereich 13 ausgebildet. In dieser dargestellten Ausführungsform sind sowohl der Nasenverstärker 20 als auch der Kinnverstärker 30 auf einer dem Atemraum 43 abgewandten Oberfläche des Nasen-Bereichs 11 bzw. des Kinn-Bereichs 12 angeordnet. Der Nasenverstärker 20 und der Kinnverstärker 30 erstrecken sich jeweils überlappend mit dem Nasen-Bereich 11 bzw. dem Kinn-Bereich 12 und weisen eine höhere Steifigkeit als der jeweils überdeckte Nasen-Bereich 11 bzw. Kinn-Bereich 12 auf. Auch können der Nasenverstärker 20 mit dem Nasen-Bereich 11 bzw. der Kinnverstärker 30 mit dem Kinn-Bereich 12 fest verbunden, insbesondere beispielsweise verschweißt sein. Durch das Vorhandensein des Nasenverstärkers 20 und des Kinnverstärkers 30 kann für die gesamte erfindungsgemäße Atemhalbmaske 1 eine höhere Steifigkeit bereitgestellt werden. Diese erhöhte Steifigkeit kann auch bereits durch ein alleiniges Vorhandensein entweder des Nasenverstärkers 20 oder alternativ des Kinnverstärkers 30 bereitgestellt werden. Auch der Faltvorgang aus dem Aufbewahrungszustand 2 in den Verwendungszustand 3 einer erfindungsgemäßen Atemhalbmaske 1 kann durch den Nasenverstärker 20 und den Kinnverstärker 30 unterstützt werden. Ein Zusammenfallen der Atemhalbmaske 1 aus ihrem Verwendungszustand 3 zurück in den Aufbewahrungszustand 2 kann durch das Vorhandensein des Nasenverstärkers 20 und des Kinnverstärkers 30 verhindert oder zumindest deutlich erschwert werden. Ferner kann der aufgespannte Atemraum 43 durch den Nasenverstärker 20 und den Kinnverstärker 30 auf besonders einfache Art und Weise vergrößert werden, wodurch insgesamt ein Tragekomfort für den Benutzer 100 bei der Verwendung einer erfindungsgemäßen Atemhalbmaske 1 gesteigert werden kann.

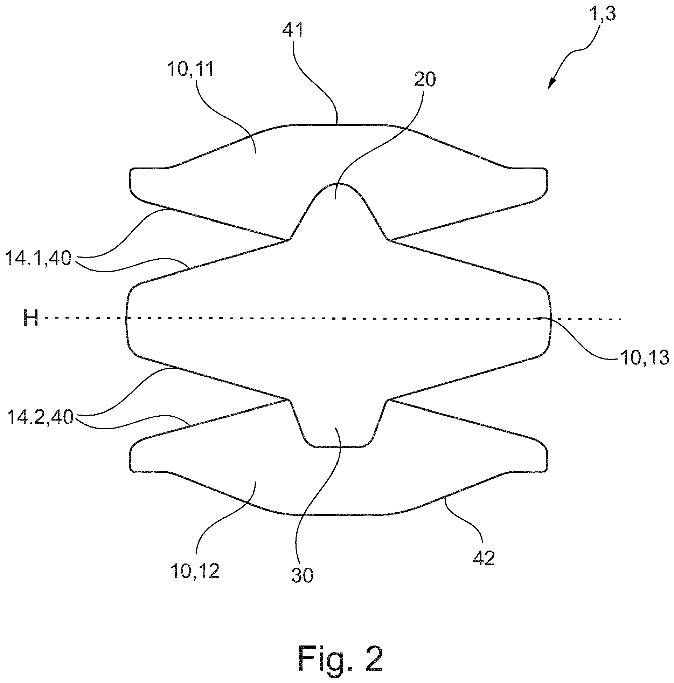

In Fig. 2 sind Maskenbereiche zu einem Verfahrensschritt eines Ausführungsbeispiels des erfindungsgemäßen Verfahrens zur Herstellung einer Atemhalbmaske 1 gezeigt. Die einzelnen Maskenbereiche 10, insbesondere der Nasen-Bereich 11, der Mund-Bereich 13 sowie der Kinn-Bereich 12 sind bereits vertikal nebeneinander angeordnet. Jeweils benachbarte Maskenbereiche 10 sind an ihren jeweiligen ersten Verbindungsabschnitten 14.1, 14.2 zumindest teilweise bereits durch eine Verschweißung miteinander verbunden. Deutlich sichtbar ist hier, dass sich der Nasenverstärker 20 und der Kinnverstärker 30, die in dieser Ausgestaltungsform zumindest im Wesentlichen dreieckig bzw. trapezförmig ausgebildet sind, überlappend über den Nasen-Bereich 11 bzw. den Kinn-Bereich 12 erstrecken. Gleichwohl sind der Nasenverstärker 20 und der Kinnverstärker 30 nicht für die Erfindung notwendig, insbesondere nicht um die Maskenbereiche 10 miteinander zu verbinden. Durch ein leichtes Auffalten, insbesondere ermöglicht durch eine Ausgestaltung der, können auch die restlichen Abschnitte der ersten Verbindungsabschnitte 14.1, 14.2 miteinander verbunden, insbesondere verschweißt werden. Dieses leichte Auffalten wird beispielsweise dadurch ermöglicht, dass wenigstens ein Teil der Verbindungsabschnitte 14.1, 14.2 als jeweils ein Faltbereich 40 ausgestaltet sind. Deutlich sichtbar ist in dieser Darstellung ebenfalls, dass die einzelnen Maskenbereiche 10 bevorzugt als einteilige Maskenabschnitte ausgebildet sein können. Ein besonders einfacher Herstellungsschritt im Verfahren zur Herstellung einer erfindungsgemäßen Atemhalbmaske 1 kann auf diese Weise bereitgestellt werden.

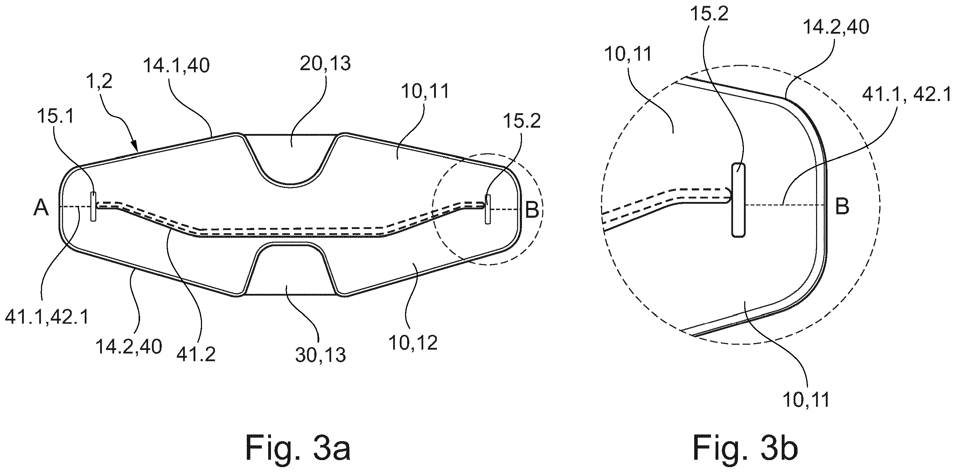

Fig. 3a zeigt ein erstes Ausführungsbeispiel einer erfindungsgemäßen Atemhalbmaske 1 im Aufbewahrungszustand 2. Bei der gezeigten Atemhalbmaske 1 wurden der Nasen-Bereich 11 und der Kinn-Bereich 12 vertikal in Richtung auf den Mund-Bereich 13 zu gefaltet, sodass der Nasen-Bereich 11 und der Kinn-Bereich 12 den Mund-Bereich 13 überdecken. Dabei überdeckt der Nasen-Bereich 11 in einem Bereich um die Nasendichtlinie 41.2 herum teilweise den Kinn-Bereich 12. Mit anderen Worten ist Nasen-Bereich 11 über den Kinn-Bereich 12 gefaltet. Möglich ist auch eine umgekehrte Faltung des Kinn-Bereichs 12 über den Nasen-Bereich 11 im Aufbewahrungszustand 2.

Die Länge der Nasendichtlinie 41 sowie die Länge der Kinndichtlinie 42 wird durch zwei zweite Verbindungsabschnitte 15.1, 15.2 begrenzt. Die beiden zweiten Verbindungsabschnitte 15.1, 15.2 erstrecken sich jeweils auf einer Fläche des Nasen-Bereichs 11 und einer Fläche des Kinn-Bereichs 12 entfernt von einem Rand des Nasen-Bereichs 11 und einem Rand des Kinn-Bereichs 12, insbesondere von dem ersten Längsende A und dem zweiten Längsende B der Atemhalbmaske 1, zwischen den zwei ersten Verbindungsabschnitten 14.1, 14.2 und der Nasendichtlinie 41 sowie der Kinndichtlinie 42. Die zwei ersten Verbindungsabschnitte 15.1, 15.2 verbinden die Nasendichtlinie 41.1 und die Kinndichtlinie 41.2 miteinander. Die beiden zweiten Verbindungsabschnitte 15.1, 15.2 sind dabei quer zu der horizontalen Erstreckung H der Atemhalbmaske 1 ausgebildet.

Die beiden zweiten Verbindungsabschnitte 15.1, 15.2 unterteilen die Nasendichtlinie 41 bzw. Kinndichtlinie 42 insbesondere in eine nicht nutzbare Nasendichtlinie 41.1 bzw. eine nicht nutzbare Kinndichtlinie 42.1, die hier gestrichelt dargestellt sind, und in eine nutzbare Nasendichtlinie 41.2 bzw. eine nutzbare Kinndichtlinie 42.2. Die nicht nutzbare Nasendichtlinie 41.1 und nicht nutzbare Kinndichtlinie 42.1 sind jeweils in Richtung zu einem der Längsenden A, B hin durch die beiden ersten Verbindungsabschnitte 14.1, 14.2 und jeweils in Richtung zu der Mitte der Atemhalbmaske 1 durch die beiden zweiten Verbindungsabschnitte 15.1, 15.2 begrenzt. Die nutzbare Nasendichtlinie 41.2 und nutzbare Kinndichtlinie 42.2 werden von den zweiten Verbindungsabschnitten 15.1, 15.2 begrenzt. Anders als die nicht nutzbare Nasendichtlinie 41.1 und nicht nutzbare Kinndichtlinie 42.1, können die nutzbare Nasendichtlinie 41.2 und nutzbare Kinndichtlinie 42.2 im Verwendungszustand 2 der Atemhalbmaske 1 für das Aufspannen des Atemraums 43 genutzt werden und abdichtend an die Gesichtspartien des Benutzers 100 angelegt werden. Vorzugsweise verkürzen die beiden zweiten Verbindungsabschnitte 15.1, 15.2 die Nasendichtlinie 41 und Kinndichtlinie 42 auf die nutzbare Nasendichtlinie 41.2 und nutzbare Kinndichtlinie 42.2 im Verwendungszustand 2 der Atemhalbmaske 1 um die nicht nutzbare Nasendichtlinie 41.1 und die nicht nutzbare Kinndichtlinie 42.1 im Aufbewahrungszustand 3 der Atemhalbmaske 1.

Fig. 3b zeigt in vergrößerter Darstellung einen Ausschnitt der Atemhalbmaske 1 aus Fig. 3a. Zu erkennen ist der Bereich des zweiten Längsendes B der Atemhalbmaske 1. Die nicht nutzbaren Kinndichtlinien 41.1, 42.1 können sowohl auf dem zweiten Längsende B als auch dem ersten Längsende A der Atemhalbmaske zusätzlich durch einen weiteren Verbindungsabschnitt, beispielsweise eine Verschweißung, miteinander und insbesondere auch mit dem Mund-Bereich 13 verbunden sein.

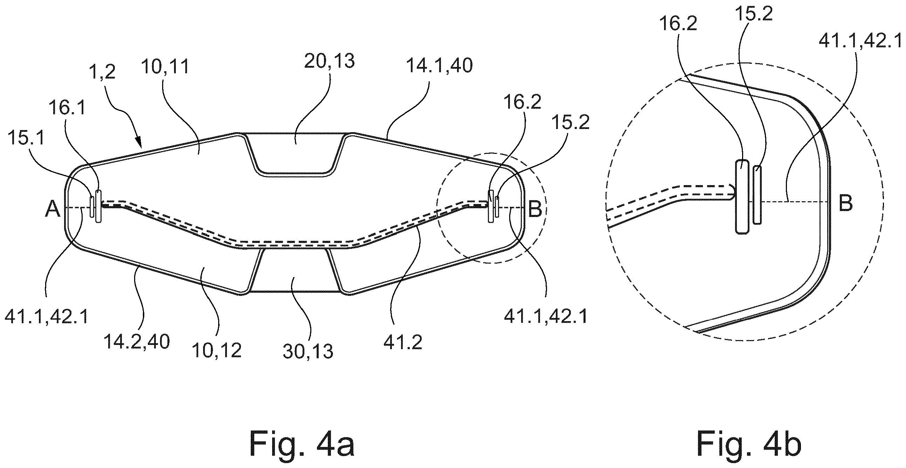

Fig. 4a und Fig. 4b zeigen ein zweites Ausführungsbeispiel einer erfindungsgemäßen Atemhalbmaske 1 im Aufbewahrungszustand 2. Im Unterschied zum ersten Ausführungsbeispiel aus Fig. 3a und Fig. 3b weist die Atemhalbmaske 1 gemäß dem zweiten Ausführungsbeispiel zwei dritte Verbindungsabschnitte 16.1, 16.2 auf. Die beiden dritten Verbindungsabschnitte 16.1, 16.2 sind jeweils derart neben dem jeweiligen der beiden zweiten Verbindungsabschnitte 15.1, 15.2 angeordnet, dass die beiden dritten Verbindungsabschnitte 16.1, 16.2 die Länge der Nasendichtlinie 41 und die Länge der Kinndichtlinie 42 weiter begrenzen. Dabei sind die Längen der nicht nutzbaren Nasendichtlinie 41.1 und der nicht nutzbaren Kinndichtlinie 41.2 vergrößert und die Längen der nutzbaren Nasendichtlinie 41.2 und der nutzbaren Kinndichtlinie 42.2 sind verkürzt. Vorliegend ist die Erstreckung der beiden dritten Verbindungsabschnitte 16.1, 16.2 in vertikaler Richtung und in Richtung der horizontalen Erstreckung H größer als die der beiden zweiten Verbindungsabschnitte 15.1, 15.2. Jeweils eines der beiden dritten Verbindungsabschnitte 16.1, 16.2 ist in Richtung von der Mitte der Atemhalbmaske 1 zu den Längsenden A, B der Atemhalbmaske 1 hin vor jeweils einem der beiden zweiten Verbindungsabschnitte 15.1, 15.2 und mit Abstand zu dem jeweiligen zweiten Verbindungsabschnitt 15.1, 15.2 angeordnet. In dem vorliegenden Ausführungsbeispiel sind die dritten Verbindungsabschnitte 16.1, 16.2 Schweißnähte, während die zweiten Verbindungsabschnitte 15.1, 15.2 eingeschweißte Kunststoffteile sind.

Das zweite Ausführungsbeispiel der Fig. 4a und Fig. 4b zeigt insbesondere eine Form einer Atemhalbmaske 1, bei der mittels der zweiten Verbindungsabschnitte 15.1, 15.2 die Geometrie des Atemraums 43 festgelegt wird. Erst die beiden dritten Verbindungsabschnitte 16.1, 16.2 sind dazu gedacht, die Länge der Nasendichtlinie 41 und die Länge der Kinndichtlinie 42 zu begrenzen und verkleinern damit die Atemhalbmaske 1 von beispielsweise einer Größe XL ohne die dritten Verbindungsabschnitte 16.1, 16.2 auf eine Größe M mit den dritten Verbindungsabschnitten 16.1, 16.2.

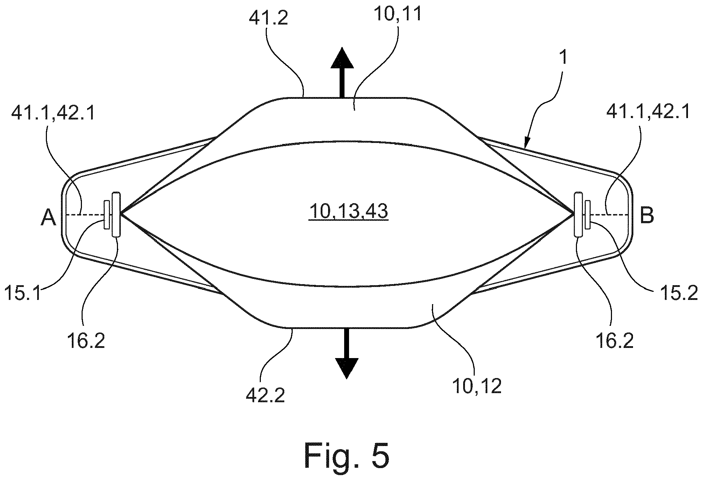

Fig. 5 zeigt die Atemhalbmaske 1 aus den Fig. 4a und Fig. 4b in einer Darstellung, in der die Atemhalbmaske 1 von dem Aufbewahrungszustand 2 in den Verwendungszustand 3 gebracht wird. Die beiden Pfeile an der nutzbaren Nasendichtlinie 41.2 und an der nutzbaren Kinndichtlinie 42.2 zeigen, wie die Atemhalbmaske 1 durch Auffalten des Nasen-Bereichs 11 und des Kinn-Bereichs 12 in den Verwendungszustand 3 gebracht wird. Dabei wird der Atemraum 43 in dem Mund-Bereich 13 aufgespannt. Wie zu erkennen ist, sind die Nasendichtlinie 41 und die Kinndichtlinie 42 auf die nutzbare Nasendichtlinie 41.2 und die nutzbare Kinndichtlinie 42.2 durch die dritten Verbindungsabschnitte 16.1, 16.2 begrenzt. Nur die nutzbare Nasendichtlinie 41.2 und die nutzbare Kenndichtlinie 42.2 lassen sich auffalten, um den Atemraum 43 aufzuspannen und an den Gesichtspartien des Benutzers 100 anzuliegen. Durch noch weiteres Auffalten der Atemhalbmaske 1 wird die Atemhalbmaske 1 schließlich in den in Fig. 1 gezeigten Verwendungszustand 2 gebracht, wobei die Längsenden A, B der Atemhalbmaske 1 sich durch das Auffalten auf einander zu bewegen.

### Bezugszeichenliste

- 1: Atemhalbmaske
- 2: Aufbewahrungszustand
- 3: Verwendungszustand
- 4: Halteband
- 5: Befestigungselement

- 10: Maskenbereich
- 11: Nasen-Bereich
- 12: Kinn-Bereich
- 13: Mund-Bereich
- 14: erster Verbindungsabschnitt
- 15: zweiter Verbindungsabschnitt
- 16: dritter Verbindungsabschnitt

- 20: Nasenverstärker
- 30: Kinnverstärker

- 40: Faltbereich
- 41: Nasendichtlinie
- 41.1: nicht nutzbare Nasendichtlinie
- 41.2: nutzbare Nasendichtlinie
- 42: Kinndichtlinie
- 42.1: nicht nutzbare Kinndichtlinie
- 42.2: nutzbare Kinndichtlinie
- 43: Atemraum

- 100: Benutzer

- A: erstes Längsende
- B: zweites Längsende
- H: horizontale Erstreckung

## Patentansprüche

1. Atemhalbmaske (1) zum Schutz gegen Partikel, Aerosole und / oder Gerüche, wobei
(a) die Atemhalbmaske (1) durch zumindest einen Faltvorgang aus einem Aufbewahrungszustand (2) in einen Verwendungszustand (3) bringbar ist,
(b) die Atemhalbmaske (1) als Maskenbereiche (10) einen Nasen-Bereich (11) mit einer Nasendichtlinie (41), einen Kinn-Bereich (12) mit einer Kinndichtlinie (42) und einen zwischen dem Nasen-Bereich (11) und dem Kinn-Bereich (12) angeordneten Mund-Bereich (13) zum Aufspannen eines Atemraums (43) im Verwendungszustand (3) der Atemhalbmaske (1) aufweist,
(c) die Atemhalbmaske (1) zumindest einen ersten Verbindungsabschnitt (14.1, 14.2) aufweist, der den Nasen-Bereich (11) und / oder den Kinn-Bereich (12) mit dem Mund-Bereich (13) verbindet und einen Faltbereich (40) für den Faltvorgang bildet,
(d) die Atemhalbmaske (1) zumindest einen zweiten Verbindungsabschnitt (15.1, 15.2) aufweist, der den Nasen-Bereich (11) und / oder den Kinn-Bereich (12) mit zumindest einem der anderen Maskenbereiche (10) verbindet und die eine Länge der Nasendichtlinie (41) und / oder eine Länge der Kinndichtlinie (42) begrenzt, und
(e) der zweite Verbindungsabschnitt (15.1, 15.2) sich zumindest teilweise auf einer Fläche des Nasen-Bereichs (11) und / oder einer Fläche des Kinn-Bereichs (12) entfernt von einem Rand des Nasen-Bereichs (11) und / oder von einem Rand des Kinn-Bereichs (12) zwischen dem ersten Verbindungsabschnitt (14.1, 14.2) und der Nasendichtlinie (41) und / oder der Kinndichtlinie (42) erstreckt,
**dadurch gekennzeichnet, dass** am Mund-Bereich (13) ein Nasenverstärker (20) und ein Kinnverstärker (30) vorgesehen sind,
die einteilig mit dem restlichen Mund-Bereich (13) ausgebildet sind, wobei der Nasenverstärker (20) und der Kinnverstärker (30) sich jeweils überlappend mit dem Nasen-Bereich (11) bzw. dem Kinn-Bereich (12) erstrecken und eine höhere Steifigkeit als der jeweils überdeckte Nasen-Bereich (11) bzw. Kinnbereich (12) aufweisen.

2. Atemhalbmaske (1) nach Anspruch 1,
**dadurch gekennzeichnet, dass**
der zweite Verbindungsabschnitt (15.1, 15.2) die Nasendichtlinie (41) und / oder die Kinndichtlinie (42) mit dem Mund-Bereich (13) dergestalt verbindet, dass die Länge der Nasendichtlinie (41) und / oder die Länge der Kinndichtlinie (42) begrenzt sind.

3. Atemhalbmaske (1) nach einem der vorangehenden Ansprüche,
**dadurch gekennzeichnet, dass**
der zweite Verbindungsabschnitt (15.1, 15.2) die Nasendichtlinie (41) mit der Kinndichtlinie (42) dergestalt verbindet, dass die Länge der Nasendichtlinie (41) und die Länge der Kinndichtlinie (42) begrenzt sind.

4. Atemhalbmaske (1) nach einem der vorangehenden Ansprüche,
**dadurch gekennzeichnet, dass**
der zweite Verbindungsabschnitt (15.1, 15.2) den Nasen-Bereich (11), den Kinn-Bereich (12) und den Mund-Bereich (13) miteinander verbindet.

5. Atemhalbmaske (1) nach einem der vorangehenden Ansprüche,
**dadurch gekennzeichnet, dass**
der zweite Verbindungsabschnitt (15.1, 15.2) höchstens in Verwendungszustand quer oder schräg oder im Wesentlichen quer zu einer horizontalen Erstreckung (H) der Atemhalbmaske (1) im Verwendungszustand (3) angeordnet ist.

6. Atemhalbmaske (1) nach einem der vorangehenden Ansprüche,
**dadurch gekennzeichnet, dass**
der zweite Verbindungsabschnitt (15.1, 15.2) durch zumindest eine stoffschlüssige Verbindung, insbesondere eine Schweißnaht oder Klebung, zumindest ein eingeschweißtes Kunststoffteil und / oder zumindest eine mechanische Klammer ausgebildet ist.

7. Atemhalbmaske (1) nach einem der vorangehenden Ansprüche,
**dadurch gekennzeichnet, dass**
der zweite Verbindungsabschnitt (15.1, 15.2) in einem Abstand von 1% bis 30% der, Länge der Atemhalbmaske (1) von dem ersten Längsende (A) oder dem zweiten Längsende (B) entfernt angeordnet ist, wobei die Länge von einem ersten Längsende (A) der Atemhalbmaske (1) zu einem dem ersten Längsende (A) gegenüberliegenden zweiten Längsende (B) der Atemhalbmaske (1) in Richtung einer horizontalen Erstreckung (H) der Atemhalbmaske (1) im Verwendungszustand (3) gemessen ist.

8. Atemhalbmaske (1) nach einem der vorangehenden Ansprüche,
**dadurch gekennzeichnet, dass**
zumindest ein dritter Verbindungsabschnitt (16.1, 16.2) derart neben dem zweiten Verbindungsabschnitt (15.1, 15.2) angeordnet ist, dass der dritte Verbindungsabschnitt (16.1, 16.2) die Länge der Nasendichtlinie (41) und/ oder die Länge der Kinndichtlinie (42) weiter begrenzt.

9. Verfahren zur Herstellung einer Atemhalbmaske (1) nach einem der vorangehenden Ansprüche mit den Schritten:
(a) Bereitstellen des Nasen-Bereichs (11), des Kinn-Bereichs (12) und des Mund-Bereichs (13),
(b) Verbinden des Nasen-Bereichs (11) und / oder des Kinn-Bereichs (12) mit dem Mund-Bereich (13) mittels des ersten Verbindungsabschnittes (14.1, 14.2) derart, dass dieser den Nasen-Bereich (11) und / oder den Kinn-Bereich (12) mit dem Mund-Bereich (13) verbindet und einen Faltbereich (40) für den Faltvorgang bildet, und
(c) Verbinden des Nasen-Bereichs (11) und / oder des Kinn-Bereichs (12) mit zumindest einem der anderen Maskenbereiche (10) mittels des zweiten Verbindungsabschnittes (15.1, 15.2) derart, dass die Länge der Nasendichtlinie (41) und / oder die Länge der Kinndichtlinie (42) begrenzt wird.

## Claims

1. A respiratory half mask (1) for protection against particles, aerosols, and/or odors,
(a) the respiratory half mask (1) being able to be brought from a storage state (2) into a use state (3) by at least one folding process,
(b) the respiratory half mask (1) comprising, as mask regions (10), a nose region (11) having a nose sealing line (41), a chin region (12) having a chin sealing line (42) and an mouth region (13) arranged between the nose region (11) and the chin region (12) for defining a respiratory space (43) in the use state (3) of the respiratory half mask (1),
(c) the respiratory half mask (1) comprising at least one first connection portion (14.1, 14.2) which connects the nose region (11) and/or the chin region (12) to the mouth region (13) and forms a folding region (40) for the folding process,
(d) the respiratory half mask (1) comprising at least one second connection portion (15.1, 15.2) which connects the nose region (11) and/or the chin region (12) to at least one of the other mask regions (10) and which delimits a length of the nose sealing line (41) and/or a length of the chin sealing line (42), and
(e) the second connection portion (15.1, 15.2) extending at least partially on a surface of the nose region (11) and/or a surface of the chin region (12) at a distance from an edge of the nose region (11) and/or from an edge of the chin region (12) between the first connection portion (14.1, 14.2) and the nose sealing line (41) and/or the chin sealing line (42),
**characterized in that**
a nose reinforcer (20) and a chin reinforcer (30) are provided at the mouth region (13),
which are formed in one piece with the rest of the mouth region (13), the nose reinforcer (20) and the chin reinforcer (30) each extending so as to overlap with the nose region (11) and the chin region (12), respectively, and having a higher rigidity than the respectively covered nose region (11) and chin region (12).

2. The respiratory half-mask (1) according to claim 1,
**characterized in that**
the second connection portion (15.1, 15.2) connects the nose sealing line (41), and/or the chin sealing line (42) to the mouth region (13) in such a way that the length of the nose sealing line (41) and/or the length of the chin sealing line (42) are delimited.

3. The respiratory half-mask (1) according to either of the preceding claims,
**characterized in that**
the second connection portion (15.1, 15.2) connects the nose sealing line (41) to the chin sealing line (42) in such a way that the length of the nose sealing line (41) and the length of the chin sealing line (42) are delimited.

4. The respiratory half-mask (1) according to any of the preceding claims,
**characterized in that**
the second connection portion (15.1, 15.2) connects the nose region (11), the chin region (12) and the mouth region (13) to one another.

5. The respiratory half-mask (1) according to any of the preceding claims,
**characterized in that**
the second connection portion (15.1, 15.2) is arranged at most in the use state transversely or obliquely or substantially transversely to a horizontal extension (H) of the respiratory half mask (1) in the use state (3).

6. The respiratory half-mask (1) according to any of the preceding claims,
**characterized in that**
the second connection portion (15.1, 15.2) is formed by at least one integrally bonded connection, in particular a weld seam or adhesive bond, at least one welded-in plastics part and/or at least one mechanical clamp.

7. The respiratory half-mask (1) according to any of the preceding claims,
**characterized in that**
the second connection portion (15.1, 15.2) is arranged at a distance of from 1% to 30% of the length of the respiratory half mask (1) from the first longitudinal end (A) or from the second longitudinal end (B), the length being measured from a first longitudinal end (A) of the respiratory half mask (1) to a second longitudinal end (B) of the respiratory half mask (1) opposite the first longitudinal end (A), in the direction of a horizontal extension (H) of the respiratory half mask (1) in the use state (3).

8. The respiratory half-mask (1) according to any of the preceding claims,
**characterized in that**
at least one third connection portion (16.1, 16.2) is arranged next to the second connection portion (15.1, 15.2) in such a way that the third connection portion (16.1, 16.2) further delimits the length of the nose sealing line (41) and/or the length of the chin sealing line (42).

9. A method for producing the respiratory half mask (1) according to any of the preceding claims, comprising the steps of:
(a) providing the nose region (11), the chin region (12) and the mouth region (13),
(b) connecting the nose region (11) and/or the chin region (12) to the mouth region (13) by means of the first connection portion (14.1, 14.2) in such a way that said portion connects the nose region (11) and/or the chin region (12) to the mouth region (13) and forms a folding region (40) for the folding process, and
(c) connecting the nose region (11) and/or the chin region (12) to at least one of the other mask regions (10) by means of the second connection portion (15.1, 15.2) in such a way that the length of the nose sealing line (41) and/or the length of the chin sealing line (42) is delimited.

## Revendications

1. Demi-masque respiratoire (1) destiné à la protection contre les particules, aérosols et/ou odeurs, dans lequel
(a) le demi-masque respiratoire (1) peut être amené d'un état de rangement (2) à un état d'utilisation (3) par l'intermédiaire d'au moins un processus de pliage,
(b) le demi-masque respiratoire (1) présente, en tant que zones de masque (10), une zone de nez (11) comportant une ligne d'étanchéité de nez (41), une zone de menton (12) comportant une ligne d'étanchéité de menton (42) et une zone de bouche (13) disposée entre la zone de nez (11) et la zone de menton (12) et permettant d'ouvrir un espace respiratoire (43) dans l'état d'utilisation (3) du demi-masque respiratoire (1),
(c) le demi-masque respiratoire (1) présente au moins une première section de liaison (14.1, 14.2) qui relie la zone de nez (11) et/ou la zone de menton (12) à la zone de bouche (13) et forme une zone de pliage (40) pour le processus de pliage,
(d) le demi-masque respiratoire (1) présente au moins une deuxième section de liaison (15.1, 15.2) qui relie la zone de nez (11) et/ou la zone de menton (12) à au moins l'une des autres zones de masque (10) et qui délimite une longueur de la ligne d'étanchéité de nez (41) et/ou une longueur de la ligne d'étanchéité de menton (42), et
(e) la deuxième section de liaison (15.1, 15.2) s'étend au moins partiellement sur une surface de la zone de nez (11) et/ou une surface de la zone de menton (12) à l'écart d'un bord de la zone de nez (11) et/ou d'un bord de la zone de menton (12) entre la première section de liaison (14.1, 14.2) et la ligne d'étanchéité de nez (41) et/ou la ligne d'étanchéité de menton (42),
**caractérisé en ce que**
au niveau de la zone de bouche (13) sont prévus un élément de renforcement de nez (20) et un élément de renforcement de menton (30)
qui sont réalisés d'une seule pièce avec le reste de la zone de bouche (13), dans lequel l'élément de renforcement de nez (20) et l'élément de renforcement de menton (30) s'étendent respectivement de manière à chevaucher la zone de nez (11) ou la zone de menton (12) et présentent une rigidité supérieure à celle de la zone de nez (11) ou de la zone de menton (12) respectivement recouverte.

2. Demi-masque respiratoire (1) selon la revendication 1,
**caractérisé en ce que**
la deuxième section de liaison (15.1, 15.2) relie la ligne d'étanchéité de nez (41) et/ou la ligne d'étanchéité de menton (42) à la zone de bouche (13) de telle sorte que la longueur de la ligne d'étanchéité de nez (41) et/ou la longueur de la ligne d'étanchéité de menton (42) sont limitées.

3. Demi-masque respiratoire (1) selon l'une des revendications précédentes,
**caractérisé en ce que**
la deuxième section de liaison (15.1, 15.2) relie la ligne d'étanchéité de nez (41) à la ligne d'étanchéité de menton (42) de telle sorte que la longueur de la ligne d'étanchéité de nez (41) et la longueur de la ligne d'étanchéité de menton (42) sont limitées.

4. Demi-masque respiratoire (1) selon l'une des revendications précédentes,
**caractérisé en ce que**
la deuxième section de liaison (15.1, 15.2) relie la zone de nez (11), la zone de menton (12) et la zone de bouche (13) les unes aux autres.

5. Demi-masque respiratoire (1) selon l'une des revendications précédentes,
**caractérisé en ce que**
la deuxième section de liaison (15.1, 15.2) est disposée, au plus haut dans l'état d'utilisation, transversalement ou obliquement ou sensiblement transversalement à une extension horizontale (H) du demi-masque respiratoire (1) dans l'état d'utilisation (3).

6. Demi-masque respiratoire (1) selon l'une des revendications précédentes,
**caractérisé en ce que**
la deuxième section de liaison (15.1, 15.2) est réalisée par au moins une liaison par complémentarité de matière, en particulier un cordon de soudure ou un collage, au moins une pièce en matière plastique soudée et/ou au moins une agrafe mécanique.

7. Demi-masque respiratoire (1) selon l'une des revendications précédentes,
**caractérisé en ce que**
la deuxième section de liaison (15.1, 15.2) est disposée de manière à être écartée, d'une distance de 1 % à 30 % de la longueur du demi-masque respiratoire (1), de la première extrémité longitudinale (A) ou de la seconde extrémité longitudinale (B), dans lequel la longueur d'une première extrémité longitudinale (A) du demi-masque respiratoire (1) à une seconde extrémité longitudinale (B) du demi-masque respiratoire (1) opposée à la première extrémité longitudinale (A) est mesurée dans la direction d'une extension horizontale (H) du demi-masque respiratoire (1) dans l'état d'utilisation (3).

8. Demi-masque respiratoire (1) selon l'une des revendications précédentes, **caractérisé en ce que**
au moins une troisième section de liaison (16.1, 16.2) est disposée à côté de la deuxième section de liaison (15.1, 15.2) de telle sorte que la troisième section de liaison (16.1, 16.2) limite davantage la longueur de la ligne d'étanchéité de nez (41) et/ou la longueur de la ligne d'étanchéité de menton (42).

9. Procédé de fabrication d'un demi-masque respiratoire (1) selon l'une des revendications précédentes, comportant les étapes consistant à :
(a) fournir la zone de nez (11), la zone de menton (12) et la zone de bouche (13),
(b) relier la zone de nez (11) et/ou la zone de menton (12) à la zone de bouche (13) au moyen de la première section de liaison (14.1, 14.2) de telle sorte que celle-ci relie la zone de nez (11) et/ou la zone de menton (12) à la zone de bouche (13) et forme une zone de pliage (40) pour le processus de pliage, et
(c) relier la zone de nez (11) et/ou la zone de menton (12) à au moins l'une des autres zones de masque (10) au moyen de la deuxième section de liaison (15.1, 15.2) de telle sorte que la longueur de la ligne d'étanchéité de nez (41) et/ou la longueur de la ligne d'étanchéité de menton (42) sont limitées.
